# EUROPÄISCHE PATENTSCHRIFT

(11) **EP 3 037 325 B1**
(45) Veröffentlichungstag und Bekanntmachung des Hinweises auf die Patenterteilung: **12.09.2018**
(21) Anmeldenummer: 15199586.7
(22) Anmeldetag: 11.12.2015
(51) Int. Cl.: B62D 21/02, B62D 33/02, B62D 33/04, B62D 21/12

(54) **VERWINDUNGSSTEIFER UND MONTAGEFREUNDLICHER MONTAGERAHMEN FÜR EIN LASTENTRANSPORTFAHRZEUG**
DISTORTION RESISTANT AND EASILY INSTALLED MOUNTING FRAME FOR A LOAD CARRYING VEHICLE
CADRE DE MONTAGE CONTREVENTE ET FACILE A MONTER POUR UN VEHICULE DE TRANSPORT DE CHARGES

(30) Priorität: 12.12.2014 DE 102014225753
(43) Veröffentlichungstag der Anmeldung: 29.06.2016
(73) Patentinhaber: Franz Xaver Meiller Fahrzeug- und Maschinenfabrik-GmbH & Co KG, 80997 München (DE)
(72) Erfinder: KIBLER, Florian, 81243 München (DE)
(74) Vertreter: Tiesmeyer, Johannes

(56) Entgegenhaltungen:
- WO-A1-2005/002951
- DE-B3-102004 047 858
- DE-C1- 19 636 026
- DE-U1- 29 800 368
- GB-A- 1 589 125
- US-A- 4 078 515
- US-A- 4 283 066

## Beschreibung

Die Erfindung betrifft einen Montagerahmen zur Montage an einem Basisrahmen eines Lastentransportfahrzeugs, wobei der Montagerahmen durch Verschrauben an dem Basisrahmen befestigbar ist.

Montagerahmen der hier betrachteten Art können z.B. Hilfsrahmen oder Grundrahmen von Kipperaufbauten oder Containerwechselgeräteaufbauten auf Lastentransportfahrzeugen sein. Die Erfindung befasst sich somit insbesondere mit Hilfsrahmen- oder Grundrahmenkonstruktionen der Aufbauten von Kipperfahrzeugen, insbesondere Absetzkipperfahrzeugen oder Abrollkipperfahrzeugen.

Derartige Hilfsrahmen oder Grundrahmen sind erheblichen Kräften und Momenten bei betreffenden Kippvorgängen bzw. Containerwechselvorgängen der Kipperfahrzeuge ausgesetzt und müssen daher eine ausreichende mechanische Stabilität, insbesondere auch eine ausreichende Verwindungs- bzw. Torsionssteifigkeit aufweisen. Um dies sicherzustellen, wurden bisher Montagerahmen verwendet, die insbesondere Längsträger mit einem geschlossenen Profil oder Kastenprofil aufweisen.

Jedoch sind die Möglichkeiten der Montage eines solchen Montagerahmens unzureichend. Er kann an einem Basisrahmen eines Lastentransportfahrzeugs, beispielsweise am Fahrgestell, befestigt werden, indem seine Längsträger mit dem Basisrahmen verschweißt werden. Dies ist jedoch zeit- und damit kostenintensiv. Außerdem erfordert eine solche Vorgehensweise ein Nachlackieren der Rahmenteile im Schweißbereich. Andererseits kann ein solcher Montagerahmen mit geschlossen profilierten Längsträgern durch gesonderte Befestigungsmittel, insbesondere Schrauben oder Bolzen, mit dem Basisrahmen verbunden werden. Die Präparation einer Schraubverbindung zwischen einem geschlossenen Rahmenprofil und dem Basisrahmen ist jedoch relativ aufwändig und bereitet häufig Probleme hinsichtlich des Korrosionsschutzes, da bei der Schraublochherstellung und dem Verschraubungsvorgang eine Beschädigung der Lackschicht oder einer sonstigen Oberflächenschutzschicht kaum zu vermeiden ist, so dass die Korrosionsbeständigkeit häufig verschlechtert wird. Dies betrifft insbesondere das Innere des geschlossenen Profils, denn dieses ist nach der Montage am Basisprofil nicht mehr ohne Weiteres zugänglich, um wirksame Korrosionsschutzmaßnahmen vornehmen zu können. Ein Montagerahmen gemäß der Merkmale der Präambel von Anspruch 1 wird in der DE19636026 gezeigt. Derartige Probleme würden bei nicht geschlossenen, also offenen oder einwandigen Profilen nicht bestehen, jedoch ist deren Torsionssteifigkeit für die bei Montagerahmen der hier betrachteten Art typischen Belastungen unzureichend.

Der Erfindung liegt somit die Aufgabe zugrunde, einen Montagerahmen der Eingangs genannten Art bereitzustellen, der sich auf einfache Weise herstellen und montieren lässt, ohne Gefahr zu laufen, die Korrosionsbeständigkeit durch unkontrolliertes Verletzen etwaiger Oberflächenschutzschichten herabzusetzen, und der eine große Torsionssteifigkeit aufweist.

Zur Lösung dieser Aufgabe wird ein Montagerahmen mit den Merkmalen des Anspruchs 1 vorgeschlagen. Ein in der vorstehend erläuterten Weise gebildetes Trägerelement hat aufgrund seines geschlossenen Teilprofils eine große Torsionssteifigkeit, ist aber dank des Befestigungsabschnitts, der nicht im Bereich des geschlossenen Teilprofils angeordnet ist, auf einfache Weise an einem Basisrahmen montierbar und kann aufgrund der leichten Zugänglichkeit des Befestigungsabschnittes auch gut gegen Korrosion geschützt werden.

Vorteilhafte Ausgestaltungen der Erfindung sind Gegenstand der abhängigen Patentansprüche.

Bei dem aus ursprünglich zwei offenen Profilelementen gebildeten Trägerelement weist vorzugsweise eines der offenen Profilelemente den Befestigungsabschnitt auf. Dadurch wird die Konstruktion einfach gehalten, denn dieses Profilelement erfüllt damit gleich zwei Funktionen, nämlich einerseits die Funktion der Bildung des geschlossenen Teilprofils und andererseits die Funktion der Bereitstellung des vorzugsweise einwandigen Befestigungsabschnitts. Des Weiteren sind vorzugsweise in dem Befestigungsabschnitt Löcher für Befestigungsmittel, also insbesondere für Schraub- und/oder Bolzenelemente zur Befestigung der Trägerelemente und damit des Montagerahmens am Basisrahmen eines Lastentransportfahrzeugs ausgebildet. Vorzugsweise umfasst der Montagerahmen auch Adapterprofilelemente zur Anpassung von Dimensionen des Montagerahmens an etwaig davon abweichenden Dimensionen des Basisrahmens des Lastentransportfahrzeugs, insbesondere zur Anpassung unterschiedlicher Rahmenbreiten. Derartige Adapterprofilelemente sind vorzugsweise so geformt, dass sie sich mit einem ihrer Abschnitte flächenhaft an dem Befestigungsabschnitt des Trägerelementes anschmiegen und dort mit dem Befestigungsabschnitt verschraubbar bzw. verschraubt sind. Sie weisen hierzu entsprechende Schraubdurchführungslöcher auf, die mit entsprechenden Schraubdurchführungslöchern des Trägerelementes fluchten. Des Weiteren weisen die Adapterprofilelemente einen Abschnitt auf, der so geformt ist, dass er flächenhaft an einer betreffenden Gegenfläche des Basisrahmens anlegbar ist und an diesem letztgenannten Abschnitt mit dem Basisrahmen zu verschrauben ist. Zwischen diesen Abschnitten zur Verbindung mit dem Basisrahmen und zur Verbindung mit dem Trägerelement weisen die Adapterprofilelemente einen Abstandsüberbrückungsabschnitt auf, welcher dazu dient, einen Abstand zur Dimensionsanpassung zu überbrücken, welcher sich aufgrund von Dimensionsunterschieden, insbesondere Breitenunterschieden zwischen dem Montagerahmen und dem Basisrahmen ergibt. Das Trägerelement kann somit auch vermittels der Adapterprofilelemente allein durch Schraubbefestigung an dem Basisrahmen fixiert werden.

Vorzugsweise haben die vorstehend angesprochenen ursprünglich offenen Profilelemente mindestens einen Formbereich mit einem C-förmigen bzw. U-förmigen Querschnitt. Solche Profilquerschnitte sind relativ einfach durch einen Biegevorgang bzw. Abkantungsvorgang oder Walzprofilvorgang bzw. Strangprofilherstellungsvorgang herzustellen und erlauben durch geeignetes Aneinandersetzen die Ausbildung eines geschlossenen Teilprofils mit wenigstens einem zusätzlichen, insbesondere einwandingen Befestigungsabschnitt.

Ein Trägerelement mit einem geschlossenen Teilprofil und einem davon abstehenden Befestigungsabschnitt, also ein Trägerelement mit einem stoffschlüssig zusammenhängenden Profil mit einem Querschnittsabschnitt in Form einer 9 kann ggf. auch durch entsprechendes Abkanten bzw. Biegen aus einem einzigen ursprünglich plattenförmigen bzw. offenen Profilelement erzeugt werden. Derzeit bevorzugt ist jedoch die Realisierung des Trägerelementes aus zwei offenen Profilelementen, die vorzugsweise durch Verschweißen stoffschlüssig aneinander fixiert werden. Dabei ist die Grundidee, dass die beiden offenen Profilelemente mit ihren jeweils zueinander gerichteten offenen Seiten mit Höhenversatz aneinander gesetzt werden. Dadurch stößt jeweils ein Schenkelarm des C-förmigen bzw. U-förmigen Profils an den mittleren Verbindungsberich zwischen den Schenkeln des jeweils anderen C-förmigen bzw. U-förmigen Profils, wodurch ein geschlossenes Teilprofil ausgebildet wird unter Bildung eines Überstandes, welcher den Befestigungsabschnitt darstellt. Eines der Profilelemente könnte in einem Sonderfall auch eine ebene Platte sein, so dass auch ein derartiges Plattenprofil im Rahmen der vorliegenden Anmeldung als offenes Profil gelten kann.

Die offenen Profilelemente können somit durchaus unterschiedlich geformt sein, solange sie Abschnitte aufweisen, die in dem bestimmungsgemäß aneinander angefügten Zustand das geschlossene Teilprofil mit Überstand bilden, so dass sich im Gesamtprofil zumindest ein Querschnittsabschnitt findet, der zumindest näherungsweise die Form einer 9 aufweist. Es soll nicht ausgeschlossen sein, dass die Profilelemente durch Schraubbefestigung aneinander fixiert sind. Vorzugsweise sind sie aber miteinander verschweißt.

Vorzugsweise überlappen Abschnitt der beiden ursprünglich offenen Profilelemente im zusammengesetzten Zustand flächig einander berührend, insbesondere in einem - in der Montageanordnung - oberen Bereich, was leicht zu realisieren ist und der Torsionssteifigkeit des Trägerelementes zusätzlich zugute kommt.

Vorzugsweise hat der Montagerahmen zwei gleichartige, zumindest im Wesentlichen spiegelsymmetrisch angeordnete Trägerelemente, nämlich Längsträgerelemente der vorstehend erläuterten Art und ist insbesondere mit einer Oberflächenschutzschicht, z.B. Tauchlackschicht, versehen, bevor er mit einem Basisrahmen verschraubt wird. Die Befestigung des Montagerahmens an dem Basisrahmen des Lastentransportfahrzeugs kann aufgrund der vorteilhaften Konstruktion des Montagerahmens auf einfache Weise so erfolgen, dass die Oberflächenschutzschicht nicht unkontrolliert zerstört und somit die Korrosionsbeständigkeit beeinträchtigt wird, dies insbesondere, weil es nicht erforderlich ist, das geschlossene Teilprofil zu verletzen.

Montagerahmen nach der vorliegenden Erfindung können als Rahmen für verschiedenste Systeme dienen, die auf Lastentransportfahrzeugen aufzubauen sind. Lastentransportfahrzeuge können Lastkraftwagen, Anhänger und dgl. sein.

Unter Bezugnahme auf die Figuren wird nachstehend ein Ausführungsbeispiel der Erfindung mit einer bestimmten Merkmalskombination dargestellt.
- Figur 1: zeigt eine Querschnittsansicht eines Längsträgers eines Montagerahmens nach der Erfindung.
- Figur 2: zeigt in einer perspektivischen Darstellung den Längsträger aus Figur 1 in Montageanordnung an einem Längsträger eines Basisrahmens eines Lastentransportfahrzeugs.

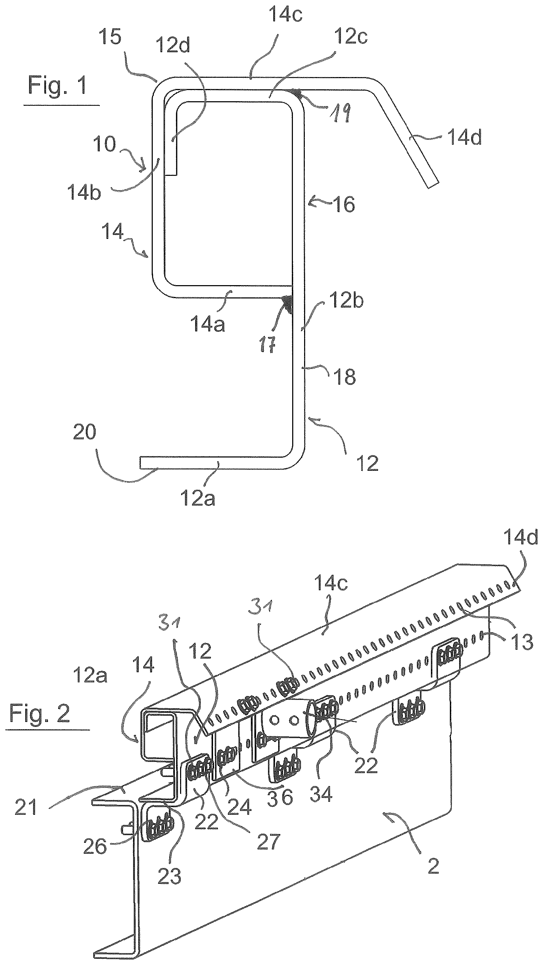

Der in Figur 1 dargestellte Längsträger 10 ist aus zwei ursprünglich offenen Profilelementen 12, 14 zusammengesetzt. Die Profilelemente 12, 14 sind mit ihren offenen Seiten bereichsweise aufeinander gerichtet so zusammengesetzt, dass sie ein geschlossenes Teilprofil 16 und einen davon abstehenden, in der in Figur 1 und Figur 2 gezeigten Montageanordnung unteren Befestigungsabschnitt 18 ausbilden. Das geschlossene Teilprofil 16 und der Befestigungsabschnitt 18 bilden zusammen einen Querschnittsabschnitt in Form einer 9. Der Befestigungsabschnitt 18 weist an seinem unteren Ende einen horizontal abgewinkelten Abschnitt 12a auf, dessen Unterseite eine Auflagefläche 20 bildet, mit welcher das Trägerelement 10 auf einer Stützfläche 21 des Basisrahmens 2 (Figur 2) oder/und auf der Stützfläche 23 eines Adapterprofilelementes 22 abgestützt werden kann. Abweichend von der dargestellten Ausführungsform des Trägerelementes 10 kann dieses auch in dem Schenkelabschnitt 12a mit vorpräparierten Schraublöchern versehen sein, um es mit einem betreffenden Rahmenteil 21 eines Basisrahmens zu verbinden.

Die Profilelemente 12, 14 sind durch ihre ursprüngliche Formgebung so aneinander abgepasst worden, dass sie im oberen Bereich des geschlossenen Teilprofils 16 unter Bildung eines doppelwandigen Abschnitts flächig aneinander anliegen, nämlich im Bereich der Abschnitte 12c und 12d des Profilelementes 12 und der Abschnitte 14b, 14c des Profilelementes 14. Dieser doppelwandige Abschnitt ist um einen Eckbereich bei 15 herumgeführt, wodurch sich eine besonders gute Formstabilität und Torsionssteifigkeit des Trägerelementes 10 ergibt. Am oberen Teil des Trägerelementes 10 weist das Profilelement 14 einen über das geschlossene Teilprofil 16 seitlich abstehenden Überstand 14d auf, welcher einen gesonderten Befestigungsabschnitt bildet, der im Beispielsfall ebenfalls mit Schraubdurchführungslöchern präpariert ist.

Der gesonderte Befestigungsabschnitt 14d liegt in der Montageanordnung des Montagerahmens 10 an dem Basisrahmen 2 seitlich außen und kann in vorteilhafter Weise zur Halterung von Fahrzeugkomponenten, wie z.B. Kotflügel, Seitenaufprallschutzelementen, Tanks, Werkzeugkästen usw. benutzt werden.

Die Profilelemente 12, 14 sind ursprünglich bereits so geformt worden, dass sie im zusammengesetzten Zustand die gewünschte Anordnung der Funktionsbereiche 12a, 14d, 16, 18 aufweisen. Zur Verbindung der beiden ursprünglich offenen Profilelemente 12, 14 sind vorzugsweise bei 17 und 19 Schweißraupen vorgesehen, die sich über die gesamte Länge des Trägerelementes 10 erstrecken und eine stoffschlüssige Verbindung zwischen den ursprünglich offenen Profilelementen 12, 14 herstellen.

Mit 34, 36 sind weitere Beschläge gekennzeichnet, die zur Befestigung zusätzlicher Komponenten, wie z.B. Schmutzfänger, Lampen, Blinker usw. dienen können.

Die Beschläge 34, 36 sowie die Adapterprofilelemente 22 und die Befestigungsabschnitte 14d, 18 weisen zueinander passende Lochbilder entsprechender Schraubdurchführungslöcher 13, 24, 26, 27 für Schrauben 31 auf. Diese Schraublöcher sind vorpräpariert und vorzugsweise durchgehend mit einer Oberflächenschutzschicht versehen, z.B. einer Tauchlackschicht, die den kompletten Montagerahmen überzieht. Entsprechende Oberflächenschutzschichten weisen auch die Adapterprofilelemente 22 und die übrigen Beschläge 34, 36 auf.

Es sei darauf hingewiesen, dass Varianten des gezeigten Ausführungsbeispiels und andere Ausführungsformen der Erfindung realisierbar sind, bei denen die offenen Profilelemente 12, 14 andere Formen aufweisen. So ist auch eine Variante denkbar, bei der die in Figur 1 gezeigten Elemente 12a, 12d, 12c oder/und 14d ganz oder teilweise weggelassen sind.

Auch könnte eines der Profilelemente eine ebene Platte sein, womit ein erfindungsgemäßes Längsträgerelement 10 realisierbar wäre, wenn z.B. in Figur 1 das Profilelement 12 die Abschnitte 12a, 12c und 12d nicht aufweisen würde und somit Plattenform hätte. Insoweit würde auch eine solche Platte in der Terminologie der vorliegenden Anmeldung als offenes Profilelement zu bezeichnen sein.

## Patentansprüche

1. Montagerahmen zur Montage an einem Basisrahmen (2) eines Lastentransportfahrzeugs, wobei der Montagerahmen Längsträgerelemente (10) aufweist, die durch Verschraubung an dem Basisrahmen (2) befestigbar sind, **dadurch gekennzeichnet, dass** wenigstens eines der Längsträgerelemente aus wenigstens zwei aneinander befestigten offenen Profilelementen (12, 14) gebildet ist, die stoffschlüssig so aneinander befestigt sind, dass sie gemeinsam ein geschlossenes Teilprofil (16) und einen davon abstehenden Befestigungsabschnitt (18) ausbilden, der nicht im Bereich des geschlossenen Teilprofils (16) angeord - net ist und der mit Löchern für Befestigungsmittel (13) zur Befestigung der Längsträgerelemente (10) und damit des Montagerahmens am Basisrahmen (2) ausgebildet ist, so dass die Befestigung des Montagerahmens (10) an dem Basisrahmen (2) des Lastentransportfahrzeugs das geschlossene Teilprofil (10) nicht verletzt.

2. Montagerahmen nach Anspruch 1, **dadurch gekennzeichnet,**
**dass** das geschlossene Teilpofil (16) und der Befestigungsabschnitt (18) einen Querschnittsabschnitt (16, 18) in Form einer 9 ausbilden.

3. Montagerahmen nach Anspruch 1 oder 2, **dadurch gekennzeichnet, dass** das Trägerelement (10) wenigstens einen weiteren Befestigungsabschnitt (12a, 14d) aufweist, an dem es mit weiteren Komponenten verbunden werden kann und der ebenfalls nicht im Bereich des geschlossenen Teilprofils (16) angeordnet ist.

4. Montagerahmen nach einem der vorhergehenden Ansprüche, **dadurch gekennzeichnet, dass** das Längsträgerelement (10) ein vorbestimmtes Lochbild aus Schraubdurchführungslöchern an seinem Befestigungsabschnitt (18) bzw. seinen Befestigungsabschnitten (18, 14d) aufweist.

5. Montagerahmen nach Anspruch 2 oder einem der darauf rückbezogenen Ansprüche, **dadurch gekennzeichnet, dass** die beiden offenen Profilelemente (12, 14) so geformt und aneinander gefügt sind, dass sie abschnittsweise unter Bildung wenigstens eines doppelwandigen Abschnittes (12c, 14c) bzw. (12b, 14b) flächig aneinander anliegen.

6. Montagerahmen nach einem der vorhergehenden Ansprüche, **gekennzeichnet durch** Adapterprofilelemente (22), die mit dem Längsträger (10) und mit einem Basisrahmen (2) eines Lastentransportfahrzeugs verschraubbar sind und so geformt sind, dass sie eine Überbrückung von bestimmten Dimensionsunterschieden zwischen dem Montagerahmen und dem damit zu verbindenden Basisrahmen im bestimmungsgemäß montierten Zustand bilden.

7. Montagerahmen nach Anspruch 6, **dadurch gekennzeichnet, dass** die Adapterprofilelemente (22) ein Z-Profil aufweisen.

8. Montagerahmen nach einem der vorhergehenden Ansprüche, **dadurch gekennzeichnet, dass** er wenigstens zwei Längsträger (10) umfasst, wobei die Längsträger (10) in spiegelsymmetrischer Anordnung vorgesehen und durch Querverbindungselemente miteinander verbunden sind.

9. Montagerahmen nach einem der vorhergehenden Ansprüche, **dadurch gekennzeichnet, dass** er wenigstens eine Oberflächenschutzschicht, insbesondere Tauchlackschicht, aufweist.

10. Montagerahmen nach einem der vorhergehenden Ansprüche, **dadurch gekennzeichnet, dass** jedes Längsträgerelement (10) einen unteren, in der bestimmungsgemäßen Montageanordnung normalerweise horizontale Abstützabschnitte (12a) aufweist.

11. Montagerahmen nach einem der vorhergehenden Ansprüche, **dadurch gekennzeichnet, dass** wenigstens ein Längsträgerelement (10) eine an seinem normalerweise oberen Ende seitlich nach außen über das geschlossene Teilprofil (16) abstehende Befestigungsabschnitt (14d) aufweist.

## Claims

1. Mounting frame to be mounted on a base frame (2) of a load-transporting vehicle, the mounting frame comprising longitudinal beam elements (10) which can be fastened to the base frame (2) by means of screwing, **characterised in that** at least one of the longitudinal beam elements is formed by at least two open profile elements (12, 14) that are fastened to one another, which open profile elements are fastened to one another in an integrally bonded manner such that together they form a closed partial profile (16) and a fastening portion (18) projecting therefrom, which fastening portion is not arranged in the region of the closed partial profile (16) and is formed having holes for fastening means (13) for fastening the longitudinal beam elements (10), and thus the mounting frame, to the base frame (2), and therefore the process of fastening the mounting frame (10) to the base frame (2) of the load-transporting vehicle does not damage the closed partial profile (10).

2. Mounting frame according to claim 1, **characterised in that** the closed partial profile (16) and the fastening portion (18) form a portion (16, 18) of a cross section that is in the shape of a 9.

3. Mounting frame according to either claim 1 or claim 2, **characterised in that** the beam element (10) comprises at least one additional fastening portion (12a, 14d) on which said beam element can be connected to additional components and which portion is likewise not arranged in the region of the closed partial profile (16).

4. Mounting frame according to any of the preceding claims, **characterised in that** the longitudinal beam element (10) comprises, on the fastening portion (18) or fastening portions (18, 14d) thereof, a predetermined hole pattern formed by through-holes for screws.

5. Mounting frame according to claim 2, or any of the claims referring thereto, **characterised in that** the two open profile elements (12, 14) are shaped and joined to one another such that they rest against one another in a planar manner in portions so as to form at least one double-walled portion (12c, 14c) or (12b, 14b).

6. Mounting frame according to any of the preceding claims, **characterised by** adapter profile elements (22) which can be screwed to the longitudinal beam (10) and to a base frame (2) of a load-transporting vehicle and are shaped such that they overcome specific differences in size between the mounting frame and the base frame to be connected thereto when mounted as intended.

7. Mounting frame according to claim 6, **characterised in that** the adapter profile elements (22) have a Z-profile.

8. Mounting frame according to any of the preceding claims, **characterised in that** said frame comprises at least two longitudinal beams (10), the longitudinal beams (10) being arranged in a mirror-symmetrical manner and being interconnected by transverse connecting elements.

9. Mounting frame according to any of the preceding claims, **characterised in that** said frame comprises at least one protective surface layer, in particular a dip-coating layer.

10. Mounting frame according to any of the preceding claims, **characterised in that** each longitudinal beam element (10) comprises a lower support portion (12a) that is usually horizontal in the intended mounting arrangement.

11. Mounting frame according to any of the preceding claims, **characterised in that** at least one longitudinal beam element (10) comprises, on the end thereof that is usually at the top, a fastening portion (14d) which projects laterally outwards beyond the closed partial profile (16).

## Revendications

1. Châssis de montage destiné au montage à un châssis de base (2) d'un véhicule de transport de charges, dans lequel le châssis de montage présente des éléments formant longerons (10), qui peuvent être fixés par vissage au châssis de base (2), **caractérisé en ce qu'**au moins un des éléments formant longerons est formé à partir d'au moins deux éléments profilés (12, 14) ouverts fixés l'un à l'autre, qui sont fixés l'un à l'autre par liaison de matière de telle sorte qu'ils réalisent conjointement un profil partiel (16) fermé et une portion de fixation (18) en dépassant, qui n'est pas disposée dans la zone du profil partiel (16) fermé et qui est réalisée avec des trous pour des moyens de fixation (13) servant à la fixation des éléments formant longerons (10) et ainsi du châssis de montage au châssis de base (2), de sorte que la fixation du châssis de montage (10) au châssis de base (2) du véhicule de transport de charges n'entame pas le profil partiel (10) fermé.

2. Châssis de montage selon la revendication 1, **caractérisé en ce**
**que** le profil partiel (16) fermé et la portion de fixation (18) réalisent une portion de section transversale (16, 18) sous la forme d'un 9.

3. Châssis de montage selon la revendication 1 ou 2, **caractérisé en ce que** l'élément de support (10) présente au moins une autre portion de fixation (12a, 14d), par laquelle il peut être relié à d'autres composants et qui n'est pas non plus disposé dans la zone du profil partiel (16) fermé.

4. Châssis de montage selon l'une quelconque des revendications précédentes, **caractérisé en ce que** l'élément formant longeron (10) présente un schéma de trous prédéfini composé de trous de passage de vis à sa portion de fixation (18) ou ses portions de fixation (18, 14d).

5. Châssis de montage selon la revendication 2 ou l'une quelconque des revendications s'y rapportant, **caractérisé en ce que** les deux éléments profilés (12, 14) ouverts sont moulés et assemblés l'un à l'autre de telle sorte qu'ils reposent l'un contre l'autre à plat par endroits en formant au moins une portion (12c, 14c) ou (12b, 14b) à double paroi.

6. Châssis de montage selon l'une quelconque des revendications précédentes, **caractérisé par** des éléments profilés adaptateurs (22), qui peuvent être vissés au longeron (10) et au châssis de base (2) d'un véhicule de transport de charges et sont moulés de telle sorte qu'ils forment un pont de différentes dimensions définies entre le châssis de montage et le châssis de base à relier à celui-ci dans l'état monté conforme à l'usage prévu.

7. Châssis de montage selon la revendication 6, **caractérisé en ce que** les éléments profilés adaptateurs (22) présentent un profil en Z.

8. Châssis de montage selon l'une quelconque des revendications précédentes, **caractérisé en ce qu'**il comprend au moins deux longerons (10), dans lequel les longerons (10) sont prévus selon un agencement par symétrie en miroir et sont reliés les uns aux autres par des éléments de liaison transversaux.

9. Châssis de montage selon l'une quelconque des revendications précédentes, **caractérisé en ce qu'**il présente au moins une couche de protection de surface, en particulier une couche de peinture à l'eau.

10. Châssis de montage selon l'une quelconque des revendications précédentes, **caractérisé en ce que** chaque élément formant longeron (10) présente une portion de soutien (12a) inférieure, habituellement horizontale dans l'agencement de montage conforme à l'usage prévu.

11. Châssis de montage selon l'une quelconque des revendications précédentes, **caractérisé en ce qu'**au moins un élément formant longeron (10) présente une portion de fixation (14d) dépassant, à son extrémité habituellement supérieure, vers l'extérieur latéralement du profil partiel (16) fermé.
